# EUROPÄISCHE PATENTANMELDUNG

(11) **EP 4 782 277 A1**
(43) Veröffentlichungstag der Anmeldung: **29.07.2026**
(21) Anmeldenummer: 26154477.9
(22) Anmeldetag: 27.01.2026
(51) Int. Cl.: B60P 1/44

(54) **FAHRZEUGTECHNISCHE HEBEBÜHNENVORRICHTUNG, DAMIT AUSGESTATTETES FAHRZEUG, SOWIE VERWENDUNG**

(30) Priorität: 28.01.2025 DE 102025102993; 28.01.2025 DE 202025100421 U
(71) Anmelder: Krist GmbH, 58636 Iserlohn (DE)
(72) Erfinder: Kaiser, Markus, 58636 Iserlohn (DE)
(74) Vertreter: Tanner, Lukas

(57) **Zusammenfassung**

Barrierefreiheit für Rollstühle oder dergleichen Lasten kann insbesondere bei Fahrzeugen nur auf vergleichsweise aufwändige Art und Weise sichergestellt werden, insbesondere dann, wenn Apparaturen für Barrierefreiheit eine amtliche Zulassung für das jeweilige Fahrzeug erfordern. Bereitgestellt wird eine fahrzeugtechnische Hebebühnenvorrichtung mit wenigstens einem Lastaufnahme-Flächenelement, eingerichtet zur Überwindung eines vordefinierbaren Höhenunterschieds von mindestens 30cm, und eingerichtet zum Zurückbauen/-verlagern des wenigstens einen Lastaufnahme-Flächenelements von einer Betriebsstellung außerhalb der Fahrzeughülle in eine Transportstellung innerhalb des Fahrzeugs in zumindest annähernd vertikaler Ausrichtung, aufweisend eine an das Fahrzeug lasttragend gekoppelte/koppelbare Abstützeinheit und eine strukturell-lasttragend damit verbundene Hebeeinheit; wobei die fahrzeugtechnische Hebebühnenvorrichtung eingerichtet ist zum Verlagern des wenigstens einen Lastaufnahme-Flächenelements aus der Transportstellung in eine zumindest annähernd horizontale Ausrichtung in Betriebsstellung. Dies liefert einen besonders vorteilhaften Kompromiss aus schlankem vorrichtungstechnischem Aufbau, geringen Herstellungs-/Bereitstellungskosten, geringem Eingriff in das jeweilige Fahrzeug, leichter Nachrüstbarkeit, hohem Grad an Autarkie für die jeweilige auf Barrierefreiheit angewiesene Person.

## Beschreibung

### TECHNISCHES GEBIET

Die vorliegende Erfindung betrifft eine fahrzeugtechnische Hebebühnenvorrichtung mit wenigstens einem Lastaufnahme-Flächenelement, eingerichtet zur Überwindung eines vordefinierbaren Höhenunterschieds von mindestens 30cm zwischen dem Untergrund und einem Ladebereich eines Fahrzeugs, und eingerichtet zum Zurückbauen/-verlagern des wenigstens einen Lastaufnahme-Flächenelements von einer Betriebsstellung außerhalb der Fahrzeughülle in eine Transportstellung innerhalb des Fahrzeugs in zumindest annähernd vertikaler Ausrichtung des wenigstens einen Lastaufnahme-Flächenelements, aufweisend eine an das Fahrzeug lasttragend gekoppelte/koppelbare Abstützeinheit und eine strukturell-lasttragend damit verbundene Hebeeinheit zum Heben und Senken des wenigstens einen Lastaufnahme-Flächenelements. Die vorliegende Erfindung betrifft auch ein mit einer solchen fahrzeugtechnischen Hebebühnenvorrichtung ausgestattetes Fahrzeug, insbesondere in einer lasttragenden Anordnung im Koffer-/Laderaum des Fahrzeugs. Dabei kann die vorliegende Erfindung auch basierend auf einem Verfahren zum Betätigen wenigstens einer Kinematik einer solchen fahrzeugtechnischen Hebebühnenvorrichtung implementiert sein/werden, insbesondere bei rein mechanischer Kinematik ohne elektrische, hydraulische oder dergleichen nicht-mechanischer Antriebskomponenten. Nicht zuletzt betrifft die vorliegende Erfindung auch die Verwendung wenigstens einer rein mechanisch konzipierten Kinematik ohne elektrische und/oder aktuatorische und/oder hydraulische Komponenten und auch ohne aktive Antriebskomponenten, zum Bereitstellen einer solchen fahrzeugtechnischen Hebebühnenvorrichtung, die bevorzugt lediglich an einem Laderaumboden des Fahrzeugs am Fahrzeug befestigt ist und ansonsten nicht weiter strukturell oder elektrisch oder sonst wie in die Fahrzeugarchitektur eingreift. Insbesondere betrifft die Erfindung eine Vorrichtung und ein Verfahren gemäß dem Oberbegriff des jeweiligen unabhängigen Anspruchs.

### HINTERGRUND DER ERFINDUNG

Bei Kraftfahrzeugen (Kfz) für den Transport von an einen Rollstuhl gebundene Personen und/oder für den Transport von Einzel-Lasten insbesondere im Gewichtsspektrum 30-150kg sind Rampen oder Bühnen bekannt, die irgendwie aus dem Kofferraum ausgeklappt oder ausgefahren werden können oder die in einer Unterfluranordnung konstruktiv in den Unterbau des Kfz integriert sind. Letztere Varianten sind vergleichsweise kostenintensiv und auch nur bei vergleichsweise großen Kfz (um nicht zu sagen kleinen Transportern oder Lieferwagen) mit ausreichend Bodenfreiheit sinnvoll realisierbar, insbesondere im professionellen Gesundheitsdienstleistungsbereich (z.B. Rettungsdienste, Krankentransporte).

Gemäß dem Stand der Technik wird für die Funktion des barrierefreien Zugangs zum Kfz entweder auf vergleichsweise aufwändige fahrzeugspezifische Konstruktionen bzw. auf in den Aufbau des Kfz eingreifende Konstruktionen zurückgegriffen, die eine Zulassung z.B. durch Straßenverkehrsämter erfordern. Oder aber es werden zurückbaubare Rampen nachgerüstet, die den Zugang zum Kfz bzw. ein Verlassen des Kfz leider nur auf mehr oder weniger risikoreiche Weise ermöglichen.

Davon ausgehend besteht Interesse an vorrichtungstechnisch schlanken Designkonzepten für den barrierefreien Kfz-Zugang, die vorteilhaft auch ohne große Unterstützung durch Gerät der Dritte bedient werden können.

Beispielhaft kann die Veröffentlichung DE 10 2021 107 487 B4 genannt werden, welche eine Lasten-/Rollstuhlrampe beschreibt, die auf vorteilhafte Weise in einem Kfz-Kofferraum (bzw. Ladebereich) verbaut werden kann, ohne viel Platz einzunehmen, und die auf vorteilhafte Weise manuell bedient bzw. positioniert werden kann. Für die barrierefreie Zugänglichkeit lagert die Rampe im ausgefahrenen/ausgeklappten Zustand bestimmungsgemäß auf der Kofferraumkante auf (bzw. auf einer in diesem Höhenbereich angeordneten Abstützkonstruktion). Als nachteilig bei dieser Art Rampe kann jedoch eine vergleichsweise hohe Steigung der Rampe angesehen werden, die insbesondere bei hochbordigen Kofferraum-Kanten für den Rollstuhlfahrer oder die zu bewegenden Last zu überwinden sein mag. Zwar könnte die Länger der Rampe so groß ausgelegt werden, dass auch ein vergleichsweise großer Höhenunterschied bei moderater Steigung der Rampe überwunden werden könnte, jedoch würde dies bedeuten, dass die Rampe sehr weit nach hinten oder zur Seite vom entsprechenden Kfz hervorragt - derartige Platzverhältnisse sind in der Praxis nur selten anzutreffen und würden auch ein hohes Risiko- bzw. Behinderungspotential für weitere Verkehrsteilnehmer (Autos, Passanten, Fahrräder) bedeuten.

Die folgenden Veröffentlichungen beschreiben Vorrichtungen, mittels welchen eine Last an/aus einem Fahrzeug verlagert werden kann: DE 10 2022 126 071 A1, EP 3 295 912 A1.

Ausgehend vom Stand der Technik ist ein Bedarf an technologischen Verbesserungen im Kontext mit der barrierefreien Nutzung von Kraftfahrzeugen zu spüren, sei es im Kontext mit dem Transport von an einen Rollstuhl gebundener Personen, sei es im Kontext mit dem Ein-/Ausladen vergleichsweise großer sperriger Lasten z.B. im Format einer Waschmaschine oder einer Euro-Palette (oder von Massen bzw. nicht unterteilbarer Einzel-Lasten in vergleichbarem Gewichtsspektrum, z.B. im Bereich von 30-150kg). Nicht zuletzt besteht insbesondere hinsichtlich möglichst minimalem Risiko bei der Nutzung von Vorrichtungen für Barrierefreiheit auch Interesse an einer vorteilhaften konstruktiven Lösung, bei welcher insbesondere bezüglich des zu überwindenden Höhenunterschieds zwischen Untergrund und Ladekante allenfalls vergleichsweise kleine Steigungswinkel zu überwinden sind.

### ZUSAMMENFASSUNG DER ERFINDUNG

Aufgabe ist, eine Vorrichtung für barrierefreien Zugang zu einem Kraftfahrzeug, insbesondere zu einem Kofferraum bereitzustellen, mittels welcher ein Rollstuhl oder eine vergleichbare Last auf besonders sichere Weise in das Kraftfahrzeug hinein und auch aus dem Kraftfahrzeug heraus verbracht werden kann. Auch ist es Aufgabe, eine solche Vorrichtung derart auszugestalten, dass die Vorrichtung wenig Platz im Kraftfahrzeug einnimmt und wenig Aufwand im Zusammenhang mit der Installation im Kraftfahrzeug erfordert, insbesondere auch eine unproblematische Zulassung ermöglicht oder sogar ohne Zulassung auskommt, also möglichst wenig Änderungen am Kraftfahrzeug selbst begründet. Nicht zuletzt ist es auch Aufgabe, eine solche Vorrichtung derart auszugestalten, dass die Vorrichtung vorrichtungstechnisch schlank bleibt, auf einfache Weise bedient werden kann, und dabei allenfalls nur wenig Zusatzgerät oder Werkzeug oder Handhabungsaufwand erfordert.

Diese Aufgabe wird durch eine fahrzeugtechnische Hebebühnenvorrichtung gemäß Anspruch 1 sowie durch ein damit ausgestattetes Fahrzeug sowie durch ein Verfahren gemäß dem nebengeordneten Verfahrensanspruch sowie durch Verwendungen gemäß dem jeweiligen nebengeordneten Verwendungsanspruch gelöst. Vorteilhafte Weiterbildungen der Erfindung werden in den jeweiligen Unteransprüchen erläutert. Die Merkmale der im Folgenden beschriebenen Ausführungsbeispiele sind miteinander kombinierbar, sofern dies nicht explizit verneint ist.

Bereitgestellt wird eine fahrzeugtechnische Hebebühnenvorrichtung mit wenigstens einem Lastaufnahme-Flächenelement, eingerichtet zur Überwindung eines vordefinierbaren Höhenunterschieds von mindestens 30cm zwischen dem Untergrund und einem Ladebereich eines Fahrzeugs, und eingerichtet zum Zurückbauen oder Zurückverlagern des wenigstens einen Lastaufnahme-Flächenelements von einer Betriebsstellung außerhalb der Fahrzeughülle in eine Transportstellung innerhalb des Fahrzeugs in zumindest annähernd vertikaler Ausrichtung des wenigstens einen Lastaufnahme-Flächenelements, aufweisend eine an einem Fahrzeugladeraumboden an das Fahrzeug lasttragend gekoppelte/koppelbare Abstützeinheit und eine strukturell-lasttragend damit verbundene Hebeeinheit zum Heben und Senken des wenigstens einen Lastaufnahme-Flächenelements;

Erfindungsgemäß wird vorgeschlagen, dass die fahrzeugtechnische Hebebühnenvorrichtung eingerichtet ist zum Verlagern des wenigstens einen Lastaufnahme-Flächenelements aus der zumindest annähernd vertikalen Ausrichtung in der Transportstellung in eine/die zumindest annähernd horizontale Ausrichtung in Betriebsstellung. Dies ermöglicht eine vorteilhafte Kombination aus platzsparender Lagerhaltung innerhalb des Kfz und guter Nutzungsweise in der Betriebsstellung, also eine vorrichtungstechnische Optimierung in Kombination mit einer erleichterten Nutzung insbesondere dank horizontaler Ausrichtung des/der Lastaufnahme-Flächenelemente/s während der gesamten Nutzungsphase, also über alle Betriebsstellungen hinweg (keine zu überwindende Steigung).

Als Hebebühnenvorrichtung ist insbesondere eine Vorrichtung mit Hebefunktion zu verstehen, welche für eine Lastaufnahme wenigstens ein Flächenelement bzw. eine Plattform bereitstellen kann, d.h., das wenigstens eine Lastaufnahme-Flächenelement ist nicht notwendigerweise in der Art einer Bühne im engeren Sinne ausgestaltet; insoweit wird der Begriff "Bühne" hier lediglich pauschal verwendet zwecks abstrahierten Verweis auf Plattformen, Flächenelemente oder dergleichen, insbesondere zur Lagerung eines Rollstuhls oder einer Palette bzw. eines Hubwagens für Paletten oder dergleichen.

Es ist zu verstehen, dass gemäß der vorliegenden Offenbarung bei Bezugnahme auf Kfz synonym auch allgemein auf Fahrzeuge Bezug genommen wird; insofern ist die Bezugnahme auf Kraftfahrzeuge lediglich als Bezugnahme auf einen beispielhaften Fahrzeugtyp zu verstehen.

Es ist zu verstehen, dass die Abstützeinheit auch eine Aufnahmefunktion zur Aufnahme der Mechanik/Kinematik erfüllen bzw. umfassen kann, insbesondere dann, wenn die Abstützeinheit zumindest weitgehend in sich geschlossen kastenartig ausgestaltet ist. Dies kann auch die Sicherheit in der Handhabung erhöhen, insbesondere derart, dass ein Verklemmen oder Blockieren oder dergleichen Behinderung z.B. durch im Kfz transportierte Güter/Ladung nicht auftreten kann.

Personifizierte Begriffe, soweit sie hier nicht im Neutrum formuliert sind, können im Rahmen der vorliegenden Offenbarung alle Geschlechter betreffen. Etwaige hier verwendete fremdsprachige Ausdrücke oder Abkürzungen sind jeweils branchenübliche Fachausdrücke und sind dem Fachmann geläufig. Etwaige dazu synonym verwendete/verwendbare deutschsprachige Begriffe können hier der Vollständigkeit halber redundant angegeben werden, oder vice versa.

Gemäß einem Ausführungsbeispiel ist die fahrzeugtechnische Hebebühnenvorrichtung eingerichtet, das wenigstens eine in Betriebsstellung zumindest annähernd horizontal ausgerichtete Lastaufnahme-Flächenelement zur Überwindung des vordefinierbaren/vordefinierten Höhenunterschieds in zumindest annähernd vertikaler Richtung zu verlagern (Heben/Senken wahlweise mit zu tragender Last), insbesondere bei Abstützung des wenigstens einen Lastaufnahme-Flächenelements und etwaiger zu verlagernder Last über die Abstützeinheit ausschließlich am Fahrzeug. Dies begünstigt auch die hier beschriebene vorteilhafte Nutzungsweise ohne das Erfordernis einer Neigung bzw. Schrägausrichtung des wenigstens einen Lastaufnahme-Flächenelements.

Gemäß einem Ausführungsbeispiel stellt die fahrzeugtechnische Hebebühnenvorrichtung eine bodenlose Abstützung (ohne Bodenkontakt) sicher, insbesondere ausschließlich über die an das Fahrzeug lasttragend gekoppelte/koppelbare Abstützeinheit. Dies begünstigt nicht zuletzt auch eine vereinfachte Handhabung beim Verlassen des Kfz, insbesondere ausgehend von einer Position eines Rollstuhls im Laderaum, insbesondere auch ohne das Erfordernis von Unterstützung durch eine weitere Person. Dies kann auch die Autarkie weiter verbessern. Die jeweilige Mechanik bzw. Kinematik kann demnach vorteilhaft ausschließlich über die Abstützeinheit am Kfz-Innenbereich, insbesondere am entsprechenden Lade-/Kofferraumboden oder einer darüber zugänglichen Chassis-Struktur, abgestützt werden, also ohne Bodenkontakt.

Gemäß einem Ausführungsbeispiel ist das wenigstens eine Lastaufnahme-Flächenelement durch eine Dreh-Antriebsbewegung von der Transportstellung in die Betriebsstellung und/oder innerhalb der Betriebsstellung in zumindest annähernd vertikaler Richtung verlagerbar, wobei die Dreh-Antriebsbewegung vorteilhaft durch einen systemfremden Antrieb bereitgestellt wird, z.B. manuell oder durch einen Akkuschrauber oder dergleichen vom Kfz unabhängigen Antrieb, beispielsweise auch einer Handkurbel. Anders ausgedrückt: Die vorrichtungseigene Mechanik bzw. Kinematik sieht eine Übersetzung einer Antriebsbewegung vor, ist jedoch bevorzugt antriebslos ausgestaltet. Dies begünstigt eine möglichst große (System-)Unabhängigkeit vom jeweiligen Kfz, erhöht also die Verwendbarkeit für zahlreiche unterschiedliche Kfz-Typen, und kann auch zu einer besonders kostengünstig bereitstellbaren Hebebühnenvorrichtung führen, insbesondere dann wenn ein systemfremder Antrieb z.B. durch einen handelsüblichen Akkuschrauber bereitgestellt wird, welcher z.B. auch über einen 12V-Stecker über das Kfz nachgeladen kann/könnte (falls gewünscht). Als systemfremd ist hier insbesondere nicht standardmäßig zum Kfz zugehörig zu verstehen, zumindest nicht abhängig von Einrichtungen des Kfz oder einer Energieversorgung des Kfz. Beispielsweise kann eine/die Antriebseinheit (insbesondere in Ausgestaltung als ein für den jeweiligen Hub-Vorgang hinzuziehbarer Akkuschrauber) auch in einem vorrichtungstechnisch dafür vorgesehenen Gehäuse angeordnet sein/werden. Dafür kann die fahrzeugtechnische Hebebühnenvorrichtung eine gehäuseartige Kavität bereitstellen. Die damit einher gehenden Vorteile wirken sich beispielsweise auch bei einer Nutzung der hier beschriebenen fahrzeugtechnischen Hebebühnenvorrichtung in Innenräumen aus, insbesondere da ein vollständiger Verzicht auf Kabelbäume, verlegte Kabel, Steuereinheiten oder dergleichen möglich ist. Vielmehr kann basierend auf einem einfachen Endschalter wahlweise ein motorischer Betrieb erfolgen. Für noch größere Unabhängigkeit kann eine Energiespeichereinheit insbesondere in Kombination mit einer Ladeeinheit vorgesehen sein/werden, auch wenn dies insbesondere bei Verwendung eines Akkuschraubers nicht notwendigerweise erforderlich ist, jedoch zumindest die systemseitige Variabilität erhöht.

Gemäß einem Ausführungsbeispiel stellt die fahrzeugtechnische Hebebühnenvorrichtung wenigstens eine Antriebsschnittstelle für einen systemfremden Antrieb bereit, z.B. eine Innensechskant-Schnittstelle für einen Akkuschrauber. Eine vorteilhaft standardisierte Antriebsschnittstelle ermöglicht auch, die Art und Weise des jeweils genutzten Antriebs (sei es motorisch, sei es manuell) dem jeweiligen Anwender in Hinblick auf dessen gegebenenfalls jeweils sehr individuellen Fähigkeiten zu überlassen. Auch insoweit kann auf schlankem Wege eine hohe Ergonomie bzw. Nutzerfreundlichkeit erreicht werden.

Gemäß einem Ausführungsbeispiel ist das wenigstens eine Lastaufnahme-Flächenelement durch eine translatorische Verlagerung gegen die bestimmungsgemäße Fahrtrichtung aus der Abstützeinheit heraus verlagerbar, in eine ausgefahrene Stellung. Dies kann vorteilhaft mit minimalem Kraftaufwand erfolgen, insbesondere auch rein manuell. Die Vorrichtung gleitet sicher in/gegen Fahrtrichtung vorteilhaft in Rollenführungen bzw. Kugellagern oder Gleitlagern und ist dabei vorteilhaft in einem/dem Kasten der Abstützeinheit bzw. über den Kasten abgestützt. Vorteilhaft erfolgt die Translation relativ zu einem kastenartigen Rahmen bzw. kastenartigen Gehäuse der Hebebühnenvorrichtung, insbesondere in einer Anordnung leicht oberhalb davon. Vorteilhaft weist die Abstützeinheit einen kastenartigen Rahmen bzw. ein kastenartiges Gehäuse auf, welches Drehmomente und Hebelkräfte problemlos struktursteif aufnehmen und verwindungssteif auf das Kfz übertragen kann.

Als "ausgefahrene Stellung" ist insbesondere eine Zwischenstellung der Bühne bzw. des wenigstens einen Lastaufnahme-Flächenelements zu verstehen, nämlich eine Zwischenstellung zwischen der Transportstellung innerhalb der Fahrzeughülle und der abgekippten Betriebsstellung in horizontaler Ausrichtung.

Gemäß einem Ausführungsbeispiel ist das wenigstens eine Lastaufnahme-Flächenelement aus der ausgefahrenen Stellung in vertikaler Ausrichtung in eine abgekippte Stellung in horizontaler Ausrichtung kippbar, insbesondere um zumindest annähernd 90°, wobei die abgekippte Stellung bevorzugt zumindest einer der Betriebsstellungen entspricht, insbesondere der bezüglich der vertikalen Verlagerung obersten Betriebsstellung. Dies begünstigt auch einen mechanischen/kinematischen Aufbau, welcher eine Kippachse um die translatorische Achse ermöglicht.

Gemäß einem Ausführungsbeispiel ist die fahrzeugtechnische Hebebühnenvorrichtung eingerichtet, das wenigstens eine Lastaufnahme-Flächenelement in jeder der möglichen Stellungen ausschließlich über die lasttragend ans Fahrzeug gekoppelte/koppelbare Abstützeinheit am Fahrzeug abzustützen, also ohne eigenen direkten Bodenkontakt. Hierdurch kann einerseits die Handhabung vereinfacht werden, andererseits auch der Grad der auch als körperlich eingeschränkte oder behinderte Person erzielbaren Autarkie maximiert werden.

Gemäß einem Ausführungsbeispiel umfasst die fahrzeugtechnische Hebebühnenvorrichtung eine für das wenigstens eine Lastaufnahme-Flächenelement wirksame translatorische Kinematik, deren Bewegungspfad insbesondere durch die Anordnung/Ausrichtung der Abstützeinheit oder/bzw. durch eine darin verlagerbare Scherenmechanik oder Schlitteneinheit vordefiniert ist. Dies begünstigt die hier beschriebene Kombination aus Translation, Kippen und Heben/Senken, und ermöglicht auch eine besonders struktursteife Art und Weise der Abstützung, selbst bei vergleichsweise großen Hebelkräften bzw. Momenten.

Gemäß einem Ausführungsbeispiel umfasst die fahrzeugtechnische Hebebühnenvorrichtung eine für das wenigstens eine Lastaufnahme-Flächenelement wirksame Kippkinematik, deren Bewegungspfad insbesondere durch eine sich einseitig am wenigstens einen Lastaufnahme-Flächenelement erstreckende Kippachse vordefiniert ist, wobei die Kippachse z.B. durch ein Drehgelenk gebildet oder definiert ist, welches an eine/die translatorische Kinematik gekoppelt ist. Dies begünstigt auch eine Vorgabe einer/der gewünschte Abfolge der Relativbewegungen, insbesondere ein Kippen erst dann wenn die vollständig ausgefahrene Position erreicht ist. Die Kippkinematik mag auch durch ein vergleichsweise einfaches Drehgelenk sichergestellt sein/werden. Der Begriff "Kippkinematik" ist hier im Kontext der beiden weiteren Bewegungen bzw. Kinematiken zu sehen (Translation, Heben/Senken). Ein Gelenk, welches die Kippbewegung als Freiheitsgrad zulässt, ist dabei vorteilhaft mit einer Gasdruckfeder oder dergleichen Feder-/Dämpferelement kombiniert, insbesondere zwecks hohem Sicherheitsstandard hinsichtlich der Handhabung der Lastaufnahme-Flächenelemente beim Kippen (hoch oder runter).

Es ist zu verstehen, dass die hier beschriebenen Kinematiken z.B. durch ein Kippgelenk in Kombination mit mehreren Scherenmechaniken (bzw. mehrere Scheren) und/oder wenigstens einer Schlitteneinheit und/oder wenigstens einer Dreiecksanordnung mit längenveränderlichem Schenkel gebildet werden können, insbesondere wenigstens einer in einem Kasten geführten Scherenmechanik oder Schlitteneinheit zwecks Realisierung der Translation, bei lasttragender Abstützung, und wenigstens einer Scherenhubmechanik oder Dreiecksanordnung mit längenveränderlichem Schenkel für die Auf-/Abbewegung der Lastaufnahme-Flächenelemente. Es hat sich herausgestellt, dass eine Scherenmechaniken und/oder wenigstens einer Dreiecksanordnung vergleichsweise robust und stabil abgestützt werden können, auch dann, wenn sich die Kraftwirkungsrichtung verändert und/oder vergleichsweise große Hebelkräfte übertragen werden müssen.

Gemäß einem Ausführungsbeispiel umfasst die fahrzeugtechnische Hebebühnenvorrichtung eine für das wenigstens eine horizontal ausgerichtete Lastaufnahme-Flächenelement wirksame Hebekinematik, deren Bewegungspfad insbesondere durch wenigstens eine in Betriebsstellung zumindest annähernd vertikal und/oder zumindest annähernd horizontal ausgerichtete Führung vordefiniert ist. Dies begünstigt nicht zuletzt auch das hier beschriebene Konzept von nacheinander wirksamen Kinematiken, die jeweils für eine bzw. in einer der hier beschriebenen Bewegungsphasen vorgesehen bzw. wirksam sind. Die Hebekinematik ist dabei vorteilhaft mittels eines systemfremden Antriebs, z.B. einem Akkuschrauber, betätigbar. Die Führung ist z.B. durch eine nach unten insbesondere mit der Senkbewegung verlängerbare Profilkante vorgegeben, an welcher auch ein Gegenmoment gegen die Abstützeinheit abstützbar ist. Die Führung ist z.B. durch eine Schiene vorgegeben, in welcher eine Scherenmechanik oder eine Dreiecksanordnung verlagerbar gelagert ist.

Gemäß einem Ausführungsbeispiel umfasst die fahrzeugtechnische Hebebühnenvorrichtung eine/n Dreieckskinematik/-mechanismus mit anwinkelbaren Schenkeln, eingerichtet zur translatorischen Verlagerung in/gegen Fahrtrichtung zum Positionieren des wenigstens einen Lastaufnahme-Flächenelements außerhalb der Fahrzeughülle, und eingerichtet zur Überwindung des vordefinierten Höhenunterschieds von mindestens 30cm mittels der Schenkel. Dies liefert auch einen besonders vorteilhaften Kompromiss aus Materialeinsatz, Steifigkeit, Platzbedarf, kraftarmer Bedienbarkeit.

Gemäß einem Ausführungsbeispiel umfasst die fahrzeugtechnische Hebebühnenvorrichtung wenigstens einen mit dem wenigstens einen Lastaufnahme-Flächenelement gekoppelten Linearspindel-Mechanismus aufweisend wenigstens eine Hubsäule (insbesondere Linear-Hubeinheit mit einer oder zwei Hubsäulen) eingerichtet zur lasttragenden Überwindung des vordefinierbaren/vordefinierten Höhenunterschieds. Dies ermöglicht auch eine besonders sichere und platzsparende Implementierung der Hubmechanik/-kinematik, insbesondere auch bei nur kleinem Kraftaufwand. Es ist zu verstehen, dass der Linearspindel-Mechanismus alternativ oder ergänzend zu einer/der hier beschriebenen Dreiecksanordnung implementiert sein/werden kann. Der Fachmann kann ausgehend von der vorliegenden Offenbarung über die für den jeweiligen Größen- und Lastenbereich besonders bevorzugte Art der mechanischen/kinematischen Optimierung entscheiden.

Gemäß einem Ausführungsbeispiel umfasst die Hebeeinheit eine Dreiecksanordnung mit an wenigstens zwei Schenkelabschnitten geführten und verwindungssteif positionierten Schenkeln. Dies ermöglicht einerseits eine vorteilhaft steife und belastbare Kinematik, andererseits auch die vorteilhaft robuste Übertragung von vom wenigstens einen Lastaufnahme-Flächenelement auf die Mechanik/Kinematik und bis in den Laderaumboden übertragenen Lastmomenten. Die wenigstens zwei geführten Schenkelabschnitte sind vorteilhaft translatorisch geführte und vordefiniert auf Längsabstand gehaltene Schenkelabschnitte, mittels welchen die momentane Höhenposition definierbar ist. Eine relative translatorische Positionierung der zwei geführten Schenkelabschnitte relativ zueinander ist eine lasttragend durchgeführte Positionierung, bzw. eine unter Last auf die Plattform bzw. das wenigstens eine Lastaufnahme-Flächenelement durchgeführte Positionierung; die axiale Relativposition der Schenkelabschnitte (bzw. entsprechender translatorisch geführter Schlitten) und damit auch die momentane Höhenposition kann dabei z.B. mittels einer Spindel vorgegeben werden.

Gemäß einem Ausführungsbeispiel umfasst die Hebeeinheit eine Dreiecksanordnung mit zwei das wenigstens eine Lastaufnahme-Flächenelement in der Höhe positionierenden Schenkeln, welche (z.B. jeweils gelagert in einem Schlitten mit Rollen) mittels wenigstens einer Stellschraube oder wenigstens eines Spindelmechanismus zwischen einer vollständig ausgefahrenen maximal tiefen Betriebsstellung (bei axial maximal nahe relativ zueinander positionierten Schlitten) in eine vollständig eingefahrene maximal flach-langgestreckte Stellung (bei axial maximal weit relativ voneinander entfernt positionierten Schlitten) verstellbar sind, insbesondere stufenlos. Dies ermöglicht auch, eine abgesehen vom translatorischen Ausfahren der Hebeeinheit und dem Hubvorgang selbst erforderliche weitere Kinematik zum Bereitstellen/Entfalten des wenigstens einen Lastaufnahme-Flächenelements vergleichsweise einfach/robust auszugestalten, insbesondere indem ein z.B. bei Drehwinkel90° arretierbares Kipp-Scharnier bereitgestellt wird, welches zusammen mit der Hebeeinheit translatorisch verlagert wird und in Transportstellung vorteilhaft ebenfalls innerhalb der Abstützeinheit Platz findet.

Gemäß einem Ausführungsbeispiel ist die fahrzeugtechnische Hebebühnenvorrichtung eine rein mechanische Hebebühnenvorrichtung ohne elektrische und/oder aktuatorische und/oder hydraulische Komponenten und auch ohne aktive Antriebskomponenten. Dies vereinfacht die Bereitstellung und auch den Einbau und etwaige Zulassungsmodalitäten für die Hebebühnenvorrichtung, insbesondere zumindest weitgehend unabhängig vom jeweiligen Fahrzeug(typ). Auch kann die Hebebühnenvorrichtung bei sehr gutem Kosten-Nutzen-Verhältnis bereitgestellt werden. Etwaige gewünschte Antriebskomponenten können z.B. kostengünstig durch Akkuschrauber oder dergleichen Standard-Werkzeug bereitgestellt werden. Wahlweise wird die Hebebühnenvorrichtung vollständig manuell ohne aktive Antriebe gehandhabt bzw. betrieben.

Die zuvor genannte Aufgabe wird auch gelöst durch ein Verfahren zum Positionieren einer an einem Fahrzeug montierten fahrzeugtechnischen Hebebühnenvorrichtung in einer/der Transportstellung in zumindest annähernd vertikaler Ausrichtung und/oder in eine Betriebsstellung außerhalb der Fahrzeughülle in zumindest annähernd horizontaler Ausrichtung, insbesondere einer zuvor weiter oben beschriebenen fahrzeugtechnischen Hebebühnenvorrichtung, wobei wenigstens ein Lastaufnahme-Flächenelement translatorisch relativ zu einer lasttragend an einem Fahrzeugladeraumboden an das Fahrzeug gekoppelten Abstützeinheit verlagert wird (mittels translatorischer Kinematik) und aus der vertikalen Ausrichtung in die horizontale Ausrichtung in Betriebsstellung gekippt wird (mittels Kippkinematik), in welchem Zustand das ein Lastaufnahme-Flächenelement vorteilhaft lediglich über die Abstützeinheit abgestützt wird, und in der horizontalen Ausrichtung vertikal verlagert wird (insbesondere mittels einer/der strukturell-lasttragend mit der Abstützeinheit verbundenen Hebeeinheit), oder vice versa. Hierdurch lassen sich zuvor genannte Vorteile realisieren, insbesondere in Hinblick auf Unabhängigkeit von der Beschaffenheit des Untergrundes, geringer bis keiner Steigungen für den Rollstuhlfahrer, hohem Autonomiegrad.

Ein solches Verfahren kann wahlweise auch unter Zuhilfenahme von systemfremden Antriebsmitteln wie z.B. einem Akkuschrauber oder auch manuell durch Aufbringen einer getriebeübersetzten Dreh-Antriebsbewegung durchgeführt werden.

Vorteilhaft wird das Verfahren mittels einer rein mechanisch konzipierten Kinematik ohne elektrische und/oder aktuatorische und/oder hydraulische Komponenten durchgeführt. Wahlweise kann eine systemfremde, insbesondere fahrzeugunabhängig bereitstellte aktive Antriebskomponente für die Aktuation der Kinematik(en) hinzugezogen werden.

Die zuvor genannte Aufgabe wird auch gelöst durch ein Fahrzeug, insbesondere Kfz, mit einer zuvor weiter oben beschriebenen fahrzeugtechnischen Hebebühnenvorrichtung, wobei die fahrzeugtechnische Hebebühnenvorrichtung vorteilhaft lediglich rein mechanisch an das Fahrzeug gebunden ist, insbesondere an einen Koffer-/Laderaumboden des Fahrzeugs, vorteilhaft über eine Unterseite und wahlweise auch eine Seite der Abstützeinheit. Hierdurch lassen sich zuvor genannte Vorteile realisieren, insbesondere in Hinblick auf eine schlanke Implementierung bzw. Nachrüstung der Vorrichtung an einem (beliebigen) Kfz.

Gemäß einem Ausführungsbeispiel ist eine/die Abstützeinheit der Hebebühnenvorrichtung, insbesondere ein/der Kasten der Abstützeinheit, dauerhaft mit dem Fahrzeug verbunden, z.B. verschraubt. Dies begünstigt auch ein Nachrüsten für bereits hergestellte oder auch schon genutzte Fahrzeuge. Es ist zu verstehen, dass kraft-/formschlüssige Verbindungsmittel die Montage im Fahrzeug und eine etwaige gewünschte Demontage erleichtern; gleichwohl kann die Abstützeinheit auch eingerichtet sein, stoffschlüssig mit dem Fahrzeug verbunden zu werden, insbesondere dann, wenn diese Maßnahme keine zusätzlichen Schritte hinsichtlich kraftfahrzeugtechnischer Zulassung/Freigabe durch Straßenverkehrsämter oder dergleichen Einrichtungen erfordert.

Gemäß einem Ausführungsbeispiel ist das wenigstens eine Lastaufnahme-Flächenelement von einer/der Abstützeinheit der Hebebühnenvorrichtung entkoppelbar/entkoppelt. Dies ermöglicht nicht zuletzt auch eine noch vorteilhaftere Art der Nutzung bzw. Integration in das Fahrzeug, insbesondere da das wenigstens eine Lastaufnahme-Flächenelement rückgebaut werden kann, wenn es nicht benötigt wird, z.B. indem es aus der Translationskinematik des Kastens ausgeklinkt wird. Vorteilhaft ist das wenigstens eine Lastaufnahme-Flächenelement über ein im Drehwinkel blockierendes Scharnier lediglich mit der Hebeeinheit gekoppelt, nicht aber direkt mit der Abstützeinheit.

Die zuvor genannte Aufgabe wird auch gelöst durch eine fahrzeugtechnische Hebebühnenvorrichtung gemäß der vorliegenden Offenbarung, die hergestellt ist durch Ausbilden einer translatorischen Kinematik, die an einer Abstützeinheit der fahrzeugtechnischen Hebebühnenvorrichtung zwischen einer/der Transportstellung und einer Betriebsstellung wirksam ist, und durch lasttragendes Koppeln der translatorischen Kinematik mit einer Kippkinematik zum Verbringen wenigstens eines Lastaufnahme-Flächenelements aus einer vertikalen in eine horizontale Ausrichtung, und durch lasttragendes Koppeln zumindest der translatorischen Kinematik mit einer Hebekinematik zum Heben/Senken des wenigstens einen Lastaufnahme-Flächenelements in Betriebsstellung zwischen Koffer-/Laderaumboden des Fahrzeugs und dem Untergrund. Hierdurch lassen sich zuvor genannte Vorteile realisieren, insbesondere in Hinblick auf einen optimalen Kompromiss aus minimalem Eingriff ins Fahrzeug und maximaler Unabhängigkeit von elektrischen, hydraulischen oder dergleichen Aktuatoren und auch maximaler Unabhängigkeit von der Beschaffenheit des Untergrundes.

Die zuvor genannte Aufgabe wird auch gelöst durch ein Fahrzeug mit einer fahrzeugtechnischen Hebebühnenvorrichtung gemäß der vorliegenden Offenbarung angeordnet im Laderaum des Fahrzeugs, wobei das derart ausgestattete Fahrzeug hergestellt ist durch lasttragende Montage/Befestigung der Abstützeinheit an einem Fahrzeugladeraumboden (Boden/-platte des Ladebereichs), insbesondere mittels Schraubverbindungen oder dergleichen form-/kraftschlüssiger Verbindungsmittel, insbesondere bei rein mechanischer Schnittstelle ohne elektrische oder hydraulische oder dergleichen aktuatorische Schnittstelle zum Fahrzeug. Hierdurch lassen sich zuvor genannte Vorteile realisieren, insbesondere in Hinblick auf besonders leicht und kostengünstig verfügbare Barrierefreiheit im Zusammenhang mit durch Fahrzeuge sichergestellten Mobilitäts-Situationen.

Die zuvor genannte Aufgabe wird auch gelöst durch Verwendung einer fahrzeugtechnischen Hebebühnenvorrichtung gemäß der vorliegenden Offenbarung im Lade-/Kofferraum eines Fahrzeugs, insbesondere mit heckseitiger Zugänglichkeit. Hierdurch lassen sich zuvor genannte Vorteile realisieren, insbesondere in Hinblick auf die hier beschriebene vorteilhaft platzsparende Integration der Hebebühnenvorrichtung an einer Seite des Laderaums, ohne den Platz für z.B. Euro-Paletten oder dergleichen sperriger Ladegüter zu sehr einzuschränken.

Die zuvor genannte Aufgabe wird auch gelöst durch Verwendung einer rein mechanisch konzipierten Kinematik ohne elektrische und/oder aktuatorische und/oder hydraulische Komponenten und auch ohne aktive Antriebskomponenten, zum Bereitstellen einer fahrzeugtechnischen Hebebühnenvorrichtung gemäß der vorliegenden Offenbarung. Hierdurch lassen sich zuvor genannte Vorteile realisieren, insbesondere in Hinblick auf kostengünstiges Bereitstellen und schlankes Integrieren bzw. Nachrüsten der Hebebühnenvorrichtung, insbesondere ohne das Erfordernis einer (neuen/zusätzlichen) amtlichen Zulassung (bzw. Betriebserlaubnis) für das jeweilige mit der Hebebühnenvorrichtung ausgestattete Fahrzeug.

Die zuvor genannte Aufgabe wird auch gelöst durch Verwendung einer rein mechanisch konzipierten Kinematik ohne elektrische und/oder aktuatorische und/oder hydraulische Komponenten zum Bereitstellen einer fahrzeugtechnischen Hebebühnenvorrichtung gemäß der vorliegenden Offenbarung, wobei die Kinematik eingerichtet ist für eine lineare Verlagerung bzw. für eine Translation des wenigstens einen Lastaufnahme-Flächenelements in Höhenrichtung. Dies liefert auch weitere Möglichkeiten der Integration in ein Fahrzeug, sei es im Heckbereich, sei es seitlich. Beispielsweise ist/wird die Translation in Höhenrichtung mittels wenigstens einer in vertikaler Richtung wirksamen bzw. ausrichtbaren Hub-Spindel sichergestellt. Wahlweise wird die Integration in/an ein Fahrzeug auch in Kombination mit wenigstens einem außen am Fahrzeug vorgesehenen Gestänge oder dergleichen vorrichtungstechnischer Abstützkomponenten realisiert.

Zusammenfassung: Barrierefreiheit für Rollstühle oder dergleichen Lasten kann insbesondere bei Fahrzeugen nur auf vergleichsweise aufwändige Art und Weise sichergestellt werden, insbesondere dann, wenn Apparaturen für Barrierefreiheit eine (neue/zusätzliche) amtliche Zulassung (bzw. Betriebserlaubnis) für das jeweilige Fahrzeug erfordern. Bereitgestellt wird eine fahrzeugtechnische Hebebühnenvorrichtung mit wenigstens einem Lastaufnahme-Flächenelement, eingerichtet zur Überwindung eines vordefinierbaren Höhenunterschieds von mindestens 30cm zwischen dem Untergrund und einem Ladebereich eines Fahrzeugs, und eingerichtet zum Zurückbauen/-verlagern des wenigstens einen Lastaufnahme-Flächenelements von einer Betriebsstellung außerhalb der Fahrzeughülle in eine Transportstellung innerhalb des Fahrzeugs in zumindest annähernd vertikaler Ausrichtung des wenigstens einen Lastaufnahme-Flächenelements, aufweisend eine an das Fahrzeug lasttragend gekoppelte/koppelbare Abstützeinheit und eine strukturell-lasttragend damit verbundene Hebeeinheit zum Heben und Senken des wenigstens einen Lastaufnahme-Flächenelements; wobei die fahrzeugtechnische Hebebühnenvorrichtung eingerichtet ist zum Verlagern des wenigstens einen Lastaufnahme-Flächenelements aus der zumindest annähernd vertikalen Ausrichtung in der Transportstellung in eine/die zumindest annähernd horizontale Ausrichtung in Betriebsstellung. Dies liefert einen besonders vorteilhaften Kompromiss aus schlankem vorrichtungstechnischem Aufbau, geringen Herstellungs-/Bereitstellungskosten, geringem Eingriff in das jeweilige Fahrzeug, leichter Nachrüstbarkeit, hohem Grad an Autarkie für die jeweilige auf Barrierefreiheit angewiesene Person. Die vorliegende Erfindung betrifft auch ein Verfahren zum Betätigen wenigstens einer Kinematik einer solchen fahrzeugtechnischen Hebebühnenvorrichtung sowie entsprechende Verwendungen.

### KURZE BESCHREIBUNG DER FIGUREN

In den nachfolgenden Zeichnungsfiguren wird die Erfindung noch näher beschrieben, wobei für Bezugszeichen, die nicht explizit in einer jeweiligen Zeichnungsfigur beschrieben werden, auf die anderen Zeichnungsfiguren verwiesen wird. Es zeigen jeweils in schematischer Darstellung:
**Figuren 1A, 1B****,** **1C, 1D** in drei perspektivischen Ansichten und in einer perspektivischen Detailansicht eine Hebebühnenvorrichtung gemäß einem Ausführungsbeispiel;
**Figuren 2A, 2B** jeweils in einer perspektivischen Ansicht eine Abstützeinheit und eine Hebeeinheit einer Hebebühnenvorrichtung gemäß einem weiteren Ausführungsbeispiel;
**Figuren 3A, 3B** jeweils in einer Heckansicht in Fahrtrichtung auf den geöffneten Laderaum ein mit einer Hebebühnenvorrichtung gemäß Ausführungsbeispielen ausgestattetes Fahrzeug, wobei sich die Hebebühnenvorrichtung in einer/der Transportstellung in hochgeklappter Position (Fig. 3A) oder in einer ausgefahrenen und heruntergeklappten Betriebsstellung (Fig. 3B) befindet;
**Figuren 4A, 4B** jeweils in einer perspektivischen Seitenansicht eine Hebebühnenvorrichtung gemäß einem weiteren Ausführungsbeispiel, in ausgefahrener (noch nicht heruntergeklappter) Position und in abgesenkter Position in heruntergeklapptem Zustand (Betriebsstellung);
**Figuren 5A, 5B, 5C** jeweils in einer perspektivischen Seitenansicht eine Hebebühnenvorrichtung gemäß einem weiteren Ausführungsbeispiel, in Transportstellung und in einer ausgefahrener, noch nicht heruntergeklappten Position, sowie eine Detailansicht dazu;
**Figur 6** Schritte eines Verfahrens gemäß Ausführungsbeispielen;

### DETAILLIERTE BESCHREIBUNG DER FIGUREN

Die Erfindung wird zunächst unter allgemeiner Bezugnahme auf alle Bezugsziffern und Figuren erläutert. Besonderheiten oder Einzelaspekte oder in der jeweiligen Figur gut sichtbare/darstellbare Aspekte der vorliegenden Erfindung werden individuell im Zusammenhang mit der jeweiligen Figur thematisiert.

Bereitgestellt wird eine fahrzeugtechnische Hebebühnenvorrichtung 10 mit wenigstens einem Lastaufnahme-Flächenelement 11, eingerichtet zur Überwindung eines vordefinierbaren Höhenunterschieds Δz, Δz₁₂ von mindestens 30cm zwischen dem Untergrund und einem Ladebereich 3 eines Fahrzeugs 1, und eingerichtet zum Zurückbauen/-verlagern des wenigstens einen Lastaufnahme-Flächenelements 11 von einer Betriebsstellung Pb außerhalb der Fahrzeughülle in eine Transportstellung Pt innerhalb des Fahrzeugs 1 in zumindest annähernd vertikaler Ausrichtung des wenigstens einen Lastaufnahme-Flächenelements 11, bevorzugt in platzsparender seitlich angeordneter Lagerung an nur einer Seite des Ladebereichs 3, aufweisend eine an das Fahrzeug 1 lasttragend gekoppelte/koppelbare Abstützeinheit 12 und eine strukturell-lasttragend damit verbundene Hebeeinheit 13 zum Heben und Senken des wenigstens einen Lastaufnahme-Flächenelements 11; wobei die fahrzeugtechnische Hebebühnenvorrichtung 10 eingerichtet ist zum Verlagern des wenigstens einen Lastaufnahme-Flächenelements 11 aus der zumindest annähernd vertikalen Ausrichtung in der Transportstellung Pt in eine/die zumindest annähernd horizontale Ausrichtung in Betriebsstellung Pb. Vorteilhaft ist ein/der kastenartige Rahmen 12.1 der Abstützeinheit 12 schmaler als hoch, also in Breitenrichtung y weniger ausladend als in Höhenrichtung z.

Die lasttragend an das Fahrzeug gekoppelte/koppelbare Abstützeinheit 12 weist vorteilhaft insbesondere die folgenden Komponenten auf: kastenartiger Rahmen bzw. kastenartiges Gehäuse 12.1, rein mechanische Schnittstelle 5 zum Fahrzeug; Führungen 20.1 und/oder Schienen für die Basis 16.1. Die strukturell-lasttragend mit der Abstützeinheit verbundene oder darin verlagerbare Hebeeinheit 13 weist vorteilhaft insbesondere zumindest einige der folgenden Komponenten auf: Scherenmechanik 14 mit Scherenhubmechanik 14a, Schlitteneinheit 15, Dreiecksanordnung 16 mit längenveränderlicher Basis bzw. längenveränderlichem Schenkel, translatorisch verlagerbare Basis 16.1, erster und zweiter anwinkelbarer Schenkel 16.3, Verbindungsblock/-einheit 17, Arretierbolzen 17.1, wahlweise auch einen Linearspindel-Mechanismus 19 aufweisend wenigstens eine Hubsäule eingerichtet zur lasttragenden Überwindung des vordefinierbaren/vordefinierten Höhenunterschieds;

Die hier beschriebenen mechanischen/kinematischen Komponenten können eine Kinematik 20 mit vordefiniertem Bewegungspfad für das wenigstens eine Lastaufnahme-Flächenelement definieren, insbesondere über wenigstens eine Führung 20.1, insbesondere indem zumindest eine Auswahl aus den folgenden Kinematiken realisiert ist/wird: translatorische Kinematik 21, Kippkinematik/- mechanismus 22, Hebekinematik 23, Dreieckskinematik/-mechanismus 24 mit anwinkelbaren Schenkeln.

Im Folgenden werden Besonderheiten der Erfindung unter Bezugnahmen auf einzelne Figuren bzw. Ausführungsbeispiele erläutert.

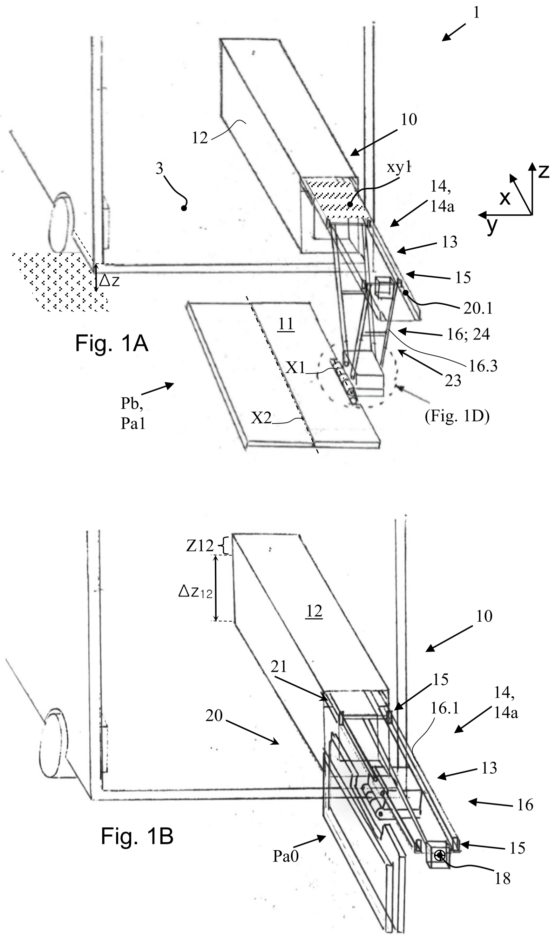

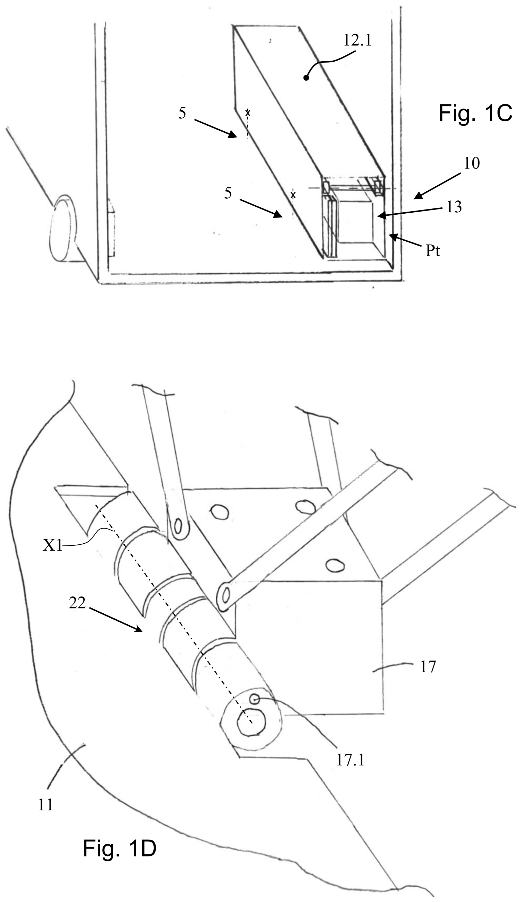

In den **Fig. 1** ist ein Ausführungsbeispiel gezeigt, bei welchem die Ausrichtung (bzw. das Verlagern) in die Horizontale mittels einer an einem Verbindungsblock verwindungssteif bereitgestellten Kippachse X1 und die Verlagerung in Höhenrichtung mittels Dreiecksanordnung bzw. Dreieckskinematik 24 realisiert werden kann.

In **Fig. 1A** ist eine Translations- und Abstützebene xy1 insbesondere für eine Schlitteneinheit 15 der Dreiecksanordnung 24 gezeigt. Der zu überwindende Höhenunterschied Δz von mindestens 30cm zwischen dem Untergrund und dem Ladebereich kann mittels der Scherenhubmechanik 14a realisiert werden. Die beiden anwinkelbaren Schenkel 16.3 können im eingefahrenen Zustand flach und vollständig im entsprechenden Führungsabschnitt innerhalb des Kastens 12.1 verschwinden. Das Lastaufnahme-Flächenelement 11 kann zu einem beliebigen Zeitpunkt des Nutzungs-Vorgangs um die Kippachse X1 gekippt werden, sei es manuell, sei es motorisch oder zumindest mechanisch unterstützt. Wahlweise kann das wenigstens eine Lastaufnahme-Flächenelement um die Faltachse X2 in der Größe veränderlich ausgestaltet sein. Fig. 1A veranschaulicht auch die drei Raumrichtungen x, y, z, nämlich die erste Horizontalrichtung (x) insbesondere längs in Fahrtrichtung, die zweite Horizontalrichtung (y) insbesondere quer zur Fahrtrichtung, und die lotrechte Richtung (z) insbesondere entsprechend der Vertikalen.

In **Fig. 1B** ist ein kinematisch-mechanische Komponenten der Hebeeinheit aufnehmender Kopfabschnitt Z12 der Abstützeinheit veranschaulicht, wobei auch der durch eine/die Dreiecksanordnung bzw. innerhalb der Abstützeinheit überwindbare Höhenunterschied Δz₁₂ angedeutet ist. Zudem ist eine (optionale) Antriebsschnittstelle 18 für wenigstens einen systemfremden Antrieb angedeutet, z.B. eine Kupplung für einen Hand-Akkuschrauber.

In **Fig. 1C** ist eine/die bevorzugt rein mechanische Schnittstelle 5 zwischen Fahrzeug und Hebebühnenvorrichtung angedeutet, d.h., eine elektrische Versorgung irgendwelcher kinematischer bzw. aktuatorisch wirkender Komponenten der Hebebühnenvorrichtung ist nicht notwendig, bzw. kann entbehrlich bleiben. Die Hebeeinheit 13 ist in der Transportstellung dargestellt.

In **Fig. 1D** ist im Detail ein/das Scharnier des Kippmechanismus 22 gezeigt, wobei ein Arretierbolzen 17.1 für guten Sicherheitsstandard sorgen kann. Der Arretierbolzen 17.1 kann sowohl in der Transportstellung als auch in der Betriebsstellung wirken, also in wenigstens zwei relativen Dreh-/Kipppositionen des Lastaufnahme-Flächenelements. Das Kippen/Klappen kann dabei in beide Richtungen um die Achse X1 realisierbar sein, insbesondere in Abhängigkeit der Größe/Ausgestaltung des Lastaufnahme-Flächenelements und der Anordnung der Führungen für die Hebeeinheit.

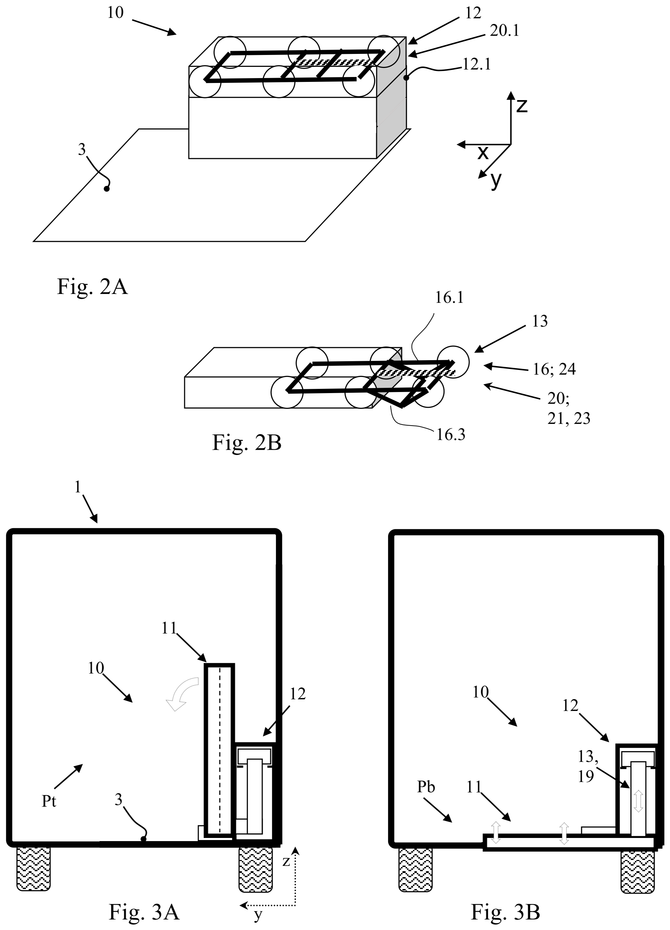

In den **Fig. 2** ist ein Ausführungsbeispiel für in der Abstützeinheit verbaute mechanische/kinematische Komponenten veranschaulicht, welche auch für den Hebemechanismus sorgen können, insbesondere indem eine Dreiecksanordnung entlang einer Spindel oder dergleichen gestaucht oder gestreckt wird und dadurch die nach unten weisende Spitze der Dreiecksanordnung in Höhenrichtung verlagert wird, derweil die Basis der Dreiecksanordnung innerhalb von Führungen in oder zumindest an der Abstützeinheit abgestützt wird. In **Fig. 2A** ist eine in die Abstützeinheit eingeschobene Anordnung der entsprechenden mechanischen/kinematischen Komponenten gezeigt, zumindest weitgehend entsprechend einer/der Anordnung in der Transportstellung. In **Fig. 2B** ist eine aus der Abstützeinheit teilweise herausgezogene Anordnung der entsprechenden mechanischen/kinematischen Komponenten gezeigt, in welcher die Rollen oder Räder (oder gleichwirkende Gleitführungen) zumindest teilweise noch innerhalb der Abstützeinheit abgestützt sind, und in welcher die Dreiecksanordnung offengelegt ist, so dass die Höhenpositionierung frei von etwaigen baulichen Beschränkungen erfolgen kann. Ein/das zumindest in der Höhe zu positionierende Lastaufnahme-Flächenelement (nicht dargestellt) kuppelt/koppelt demnach mit der Spitze der Dreiecksanordnung.

In den **Fig. 3** ist ein Ausführungsbeispiel mit vergleichsweise großflächigem Lastaufnahme-Flächenelement gezeigt, welches auch in der zurückgebauten Transportstellung im Fahrzeug vergleichsweise großflächig verbleibt. In **Fig. 3A** ist ein/das Lastaufnahme-Flächenelement 11 gezeigt, das wahlweise auch ausgefaltet werden kann, also flächenmäßig noch weiter vergrößert werden kann (angedeutete Strichlinie). In **Fig. 3B** ist die Betriebsstellung gezeigt, in welcher das Lastaufnahme-Flächenelement 11 mittels der Hebeeinheit bzw. mittels einer/der wenigstens einen Hubsäule 19 in vertikaler Richtung zwischen Untergrund und Laderaumboden positioniert werden kann. Die Punktlinienpfeile deuten die Klapp- und die Hubbewegung an.

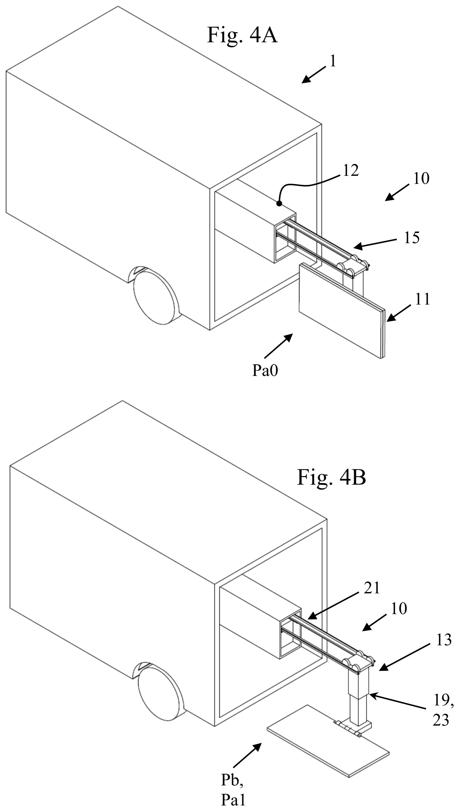

In den **Fig. 4** ist ein Ausführungsbeispiel gezeigt, bei welchem die Abstützeinheit zwei Führungsschienen aufweist, an welchen die Hebeeinheit mittels Rollen (oder gleichwirkenden Gleitführungen) zusammen mit dem Lastaufnahme-Flächenelement gelagert ist, wobei die Hebeeinheit wenigstens eine Hubsäule 19 umfasst. In **Fig. 4A** ist die ausgefahrene (noch nicht heruntergeklappte) Position Pa0 gezeigt, und in **Fig. 4B** ist die z.B. bis auf den Untergrund abgesenkte Position bei heruntergeklapptem Zustand (Betriebsstellung) Pa1, Pb des Lastaufnahme-Flächenelements gezeigt.

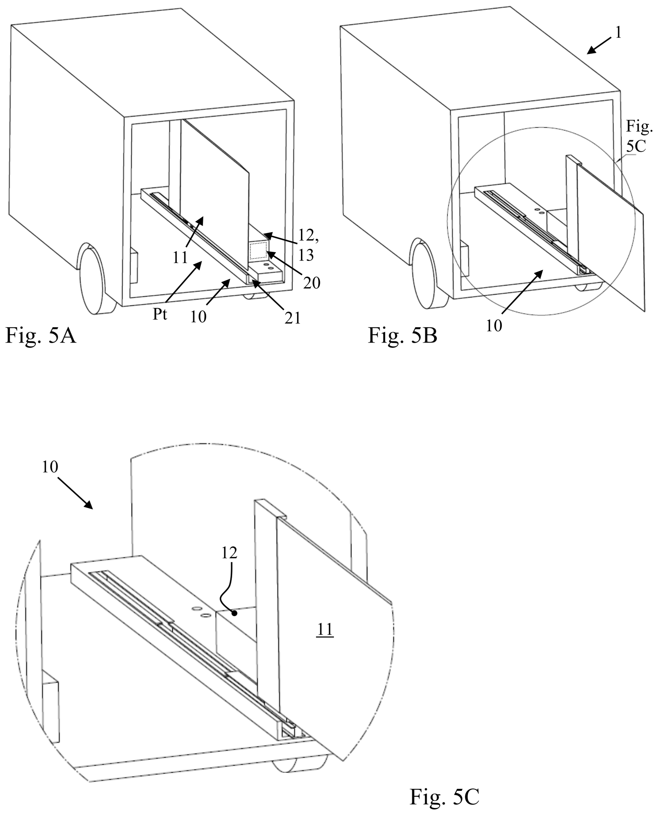

In den **Fig. 5** ist ein Ausführungsbeispiel gezeigt, bei welchem das Lastaufnahme-Flächenelement in vergleichsweise großflächiger Ausgestaltung in der Transportstellung wahlweise von der Abstützeinheit bzw. Hebeeinheit entkoppelt werden kann, z.B. mittels einer kraft-/formschlüssigen lasttragenden Kupplung. In **Fig. 5A** ist ersichtlich, dass das vergleichsweise großflächige Lastaufnahme-Flächenelement 11 translatorisch verlagert werden kann, wahlweise unabhängig von einer durch die Abstützeinheit und/oder Hebeeinheit definierten Kinematik, und aus einer ausgezogenen Position (Fig. 5C) in die Horizontale gekippt werden kann. Komponenten der Hebeeinheit sind in Fig. 5A lediglich angedeutet, und können z.B. dann mit dem Lastaufnahme-Flächenelement 11 gekuppelt/gekoppelt werden, wenn dieses bereits in die Horizontale gekippt wurde (insbesondere mit der lasttragenden Querstrebe am bugseitigen Ende des Lastaufnahme-Flächenelements). Demnach erfolgt nach dem Kuppeln eine Entkopplung des Lastaufnahme-Flächenelements von der am Laderaumboden angeordneten Führungsschiene, im Sinne einer lastragenden Übergabe an Abstützeinheit und Hebeeinheit. Wahlweise kann auch ein translatorisches Mitziehen einer den Hebemechanismus definierenden Apparatur erfolgen, z.B. indem im kastenartigen Rahmen eine entsprechende Ausnehmung oder ein Führungsschlitz vorgesehen ist/wird. Für diesbezügliche Komponenten wird auf die in den weiteren Figuren gezeigten kinematischen und mechanischen und gegebenenfalls elektrischen Komponenten hingewiesen. Im in **Fig. 5B** gezeigten Zustand kann das Lastaufnahme-Flächenelement noch entkoppelt sein. In **Fig. 5C** ist die auf dem Laderaumboden angeordnete translatorische Führung für das Lastaufnahme-Flächenelement im Detail erkennbar.

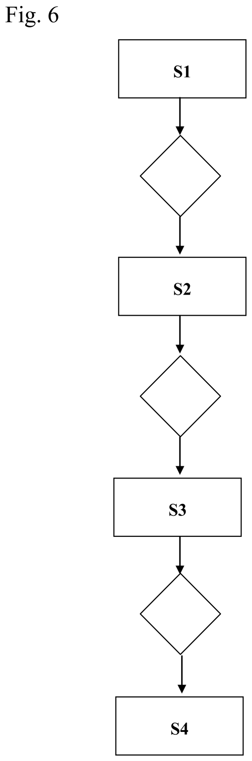

In **Fig. 6** sind Schritte eines Verfahrens bzw. Vorgangs zum Verlagern bzw. Positionieren der einzelnen Komponenten zwischen der Transportstellung und der Betriebsstellung veranschaulicht: erster Schritt **S1:** translatorisches Verlagern der Hebeeinheit (Ausfahren oder Einfahren/Rückbau); zweiter oder dritter Schritt **S2:** Höhenverlagerung der ausgefahrenen Hebeeinheit, insbesondere manuell, wahlweise zumindest teilweise motorisch (nach unten oder nach oben); zweiter oder dritter Schritt **S3:** Bereitstellen der Plattform, insbesondere Entfalten wenigstens eines Lastaufnahme-Flächenelements, oder umgekehrt (Rückbau); weiterer Schritt **S4:** Arretieren wenigstens einer mechanischen/kinematischen Komponente.

Es ist zu verstehen, dass die Reihenfolge der Schritte S2, S3 variieren kann. Schritt S1 wird initial zum Benutzen der Hebebühnenvorrichtung durchgeführt (oder reversibel zum Zurückbauen der Hebebühnenvorrichtung), und Schritt S3 wird im nicht belasteten Zustand durchgeführt, und Schritt S2 wird wahlweise unter Last oder in weitgehend lastfreiem Zustand durchgeführt. Wahlweise können alle Schritte S1 bis S4 auf manuelle Weise realisiert werden, wodurch die Vorrichtung unabhängig von einer Energieversorgung bleibt. Die in Fig. 6 angedeuteten rautenförmigen Felder zwischen den einzelnen Schritten veranschaulichen Individualisierungs-/Optimierungsmaßnahmen und/oder Steuerungsmaßnahmen, die für den Fachmann anwendungsspezifisch implementiert werden können, sei es z.B. betreffend eine motorische Unterstützung, sei es z.B. betreffend eine Sicherungsmaßnahme wie z.B. ein Arretieren hinsichtlich der Kippbewegung und/oder ein Arretieren hinsichtlich wenigstens eines translatorischen Freiheitsgrads von Lastaufnahme-Flächenelement und/oder kinematischer Komponenten.

### Bezugszeichenliste

- 1: Fahrzeug
- 3: Ladebereich eines Fahrzeugs
- 5: rein mechanische Schnittstelle zwischen Fahrzeug und Hebebühnenvorrichtung
- 10: fahrzeugtechnische Hebebühnenvorrichtung
- 11: Lastaufnahme-Flächenelement
- 12: an das Fahrzeug lasttragend gekoppelte/koppelbare Abstützeinheit
- 12.1: kastenartiger Rahmen, kastenartiges Gehäuse
- 13: strukturell-lasttragend mit der Abstützeinheit verbundene Hebeeinheit
- 14: Scherenmechanik
- 14a: Scherenhubmechanik
- 15: Schlitteneinheit
- 16: Dreiecksanordnung mit längenveränderlicher/m Basis/Schenkel
- 16.1: translatorisch verlagerbare Basis
- 16.3: erster und zweiter anwinkelbarer Schenkel
- 17: Verbindungsblock/-einheit
- 17.1: Arretierbolzen
- 18: Antriebsschnittstelle für wenigstens einen systemfremden Antrieb
- 19: Linearspindel-Mechanismus aufweisend wenigstens eine Hubsäule
- 20: Kinematik mit vordefiniertem Bewegungspfad
- 20.1: Führung
- 21: translatorische Kinematik
- 22: Kippkinematik/-mechanismus
- 23: Hebekinematik
- 24: Dreieckskinematik/-mechanismus mit anwinkelbaren Schenkeln
- Pa0: ausgefahrene Stellung des Lastaufnahme-Flächenelements
- Pa1: abgekippte Stellung des Lastaufnahme-Flächenelements
- Pb: Betriebsstellung außerhalb der Fahrzeughülle
- Pt: Transportstellung innerhalb des Fahrzeugs
- S1: erster Schritt: translatorisches Verlagern der Hebeeinheit (Ausfahren oder Einfahren/Rückbau)
- S2: zweiter oder dritter Schritt: Höhenverlagerung der ausgefahrenen Hebeeinheit
- S3: zweiter oder dritter Schritt: Bereitstellen der Plattform, insbesondere Falten
- S4: weiterer Schritt: Arretieren wenigstens einer mechanischen/kinematischen Komponente
- Δz: Höhenunterschied von mindestens 30cm zwischen dem Untergrund und Ladebereich
- Δz₁₂: Höhenunterschied überwindbar durch Dreiecksanordnung bzw. innerhalb der Abstützeinheit
- X1: Kippachse Lastaufnahme-Flächenelement
- X2: Faltachse Lastaufnahme-Flächenelement(e)
- Z12: Kopfabschnitt der Abstützeinheit
- xy1: Translations- und Abstützebene insbesondere für Schlitteneinheit bzw. Dreiecksanordnung
- x: erste Horizontalrichtung, insbesondere längs in Fahrtrichtung
- y: zweite Horizontalrichtung, insbesondere quer zur Fahrtrichtung
- z: lotrechte Richtung, insbesondere Vertikale

## Patentansprüche

1. Fahrzeugtechnische Hebebühnenvorrichtung (10) mit wenigstens einem Lastaufnahme-Flächenelement (11), eingerichtet zur Überwindung eines vordefinierbaren Höhenunterschieds von mindestens 30cm zwischen dem Untergrund und einem Ladebereich (3) eines Fahrzeugs (1), und eingerichtet zum Zurückbauen oder Zurückverlagern des wenigstens einen Lastaufnahme-Flächenelements (11) von einer Betriebsstellung (Pb) außerhalb der Fahrzeughülle in eine Transportstellung (Pt) innerhalb des Fahrzeugs in zumindest annähernd vertikaler Ausrichtung des wenigstens einen Lastaufnahme-Flächenelements (11), aufweisend eine an einem Fahrzeugladeraumboden an das Fahrzeug (1) lasttragend gekoppelte oder koppelbare Abstützeinheit (12) und eine strukturell-lasttragend damit verbundene Hebeeinheit (13) zum Heben und Senken des wenigstens einen Lastaufnahme-Flächenelements (11);
**dadurch gekennzeichnet, dass** die fahrzeugtechnische Hebebühnenvorrichtung (10) eingerichtet ist zum Verlagern des wenigstens einen Lastaufnahme-Flächenelements (11) aus der zumindest annähernd vertikalen Ausrichtung in der Transportstellung (Pt) in die zumindest annähernd horizontale Ausrichtung in Betriebsstellung (Pb).

2. Fahrzeugtechnische Hebebühnenvorrichtung nach Anspruch 1, wobei die fahrzeugtechnische Hebebühnenvorrichtung eingerichtet ist, das wenigstens eine in Betriebsstellung zumindest annähernd horizontal ausgerichtete Lastaufnahme-Flächenelement zur Überwindung des vordefinierbaren/vordefinierten Höhenunterschieds vertikal zu verlagern, insbesondere bei Abstützung des wenigstens einen Lastaufnahme-Flächenelements und etwaiger zu verlagernder Last über die Abstützeinheit ausschließlich am Fahrzeug.

3. Fahrzeugtechnische Hebebühnenvorrichtung nach einem der vorhergehenden Ansprüche, wobei die fahrzeugtechnische Hebebühnenvorrichtung eine bodenlose Abstützung sicherstellt, insbesondere ausschließlich über die an das Fahrzeug lasttragend gekoppelte/koppelbare Abstützeinheit; und/oder wobei die fahrzeugtechnische Hebebühnenvorrichtung eine rein mechanische Hebebühnenvorrichtung ohne elektrische und/oder aktuatorische und/oder hydraulische Komponenten und auch ohne aktive Antriebskomponenten ist.

4. Fahrzeugtechnische Hebebühnenvorrichtung nach einem der vorhergehenden Ansprüche, wobei das wenigstens eine Lastaufnahme-Flächenelement durch eine Dreh-Antriebsbewegung von der Transportstellung in die Betriebsstellung und/oder innerhalb der Betriebsstellung in zumindest annähernd vertikaler Richtung verlagerbar ist, wobei die Dreh-Antriebsbewegung vorteilhaft durch einen systemfremden Antrieb bereitgestellt wird; und/oder wobei die fahrzeugtechnische Hebebühnenvorrichtung wenigstens eine Antriebsschnittstelle für einen systemfremden Antrieb bereitstellt.

5. Fahrzeugtechnische Hebebühnenvorrichtung nach einem der vorhergehenden Ansprüche, wobei das wenigstens eine Lastaufnahme-Flächenelement durch eine translatorische Verlagerung gegen die bestimmungsgemäße Fahrtrichtung aus der Abstützeinheit heraus verlagerbar ist, in eine ausgefahrene Stellung; und/oder wobei das wenigstens eine Lastaufnahme-Flächenelement aus der ausgefahrenen Stellung in vertikaler Ausrichtung in eine abgekippte Stellung in horizontaler Ausrichtung kippbar ist, insbesondere um zumindest annähernd 90°, wobei die abgekippte Stellung bevorzugt zumindest einer der Betriebsstellungen entspricht; und/oder wobei die fahrzeugtechnische Hebebühnenvorrichtung eingerichtet ist, das wenigstens eine Lastaufnahme-Flächenelement in jeder der möglichen Stellungen ausschließlich über die lasttragend ans Fahrzeug gekoppelte/koppelbare Abstützeinheit am Fahrzeug abzustützen, also ohne eigenen direkten Bodenkontakt.

6. Fahrzeugtechnische Hebebühnenvorrichtung nach einem der vorhergehenden Ansprüche, umfassend eine für das wenigstens eine Lastaufnahme-Flächenelement wirksame translatorische Kinematik, deren Bewegungspfad insbesondere durch die Anordnung/Ausrichtung der Abstützeinheit oder durch eine darin verlagerbare Scherenmechanik oder Schlitteneinheit vordefiniert ist; und/oder wobei die fahrzeugtechnische Hebebühnenvorrichtung eine für das wenigstens eine Lastaufnahme-Flächenelement wirksame Kippkinematik umfasst, deren Bewegungspfad insbesondere durch eine sich einseitig am wenigstens einen Lastaufnahme-Flächenelement erstreckende Kippachse vordefiniert ist, wobei die Kippachse z.B. durch ein Drehgelenk gebildet oder definiert ist, welches an eine/die translatorische Kinematik gekoppelt ist; und/oder wobei die fahrzeugtechnische Hebebühnenvorrichtung eine für das wenigstens eine horizontal ausgerichtete Lastaufnahme-Flächenelement wirksame Hebekinematik umfasst, deren Bewegungspfad insbesondere durch wenigstens eine in Betriebsstellung zumindest annähernd vertikal und/oder zumindest annähernd horizontal ausgerichtete Führung vordefiniert ist; und/oder wobei die fahrzeugtechnische Hebebühnenvorrichtung eine/n Dreieckskinematik oder Dreiecksmechanismus mit anwinkelbaren Schenkeln umfasst, eingerichtet zur translatorischen Verlagerung in oder gegen Fahrtrichtung zum Positionieren des wenigstens einen Lastaufnahme-Flächenelements außerhalb der Fahrzeughülle, und eingerichtet zur Überwindung des vordefinierten Höhenunterschieds von mindestens 30cm mittels der Schenkel; und/oder wobei die Hebeeinheit eine Dreiecksanordnung mit an wenigstens zwei Schenkelabschnitten geführten und verwindungssteif positionierten Schenkeln umfasst; und/oder wobei die Hebeeinheit eine Dreiecksanordnung mit zwei das wenigstens eine Lastaufnahme-Flächenelement in der Höhe positionierenden Schenkeln umfasst, welche mittels wenigstens einer Stellschraube oder wenigstens eines Spindelmechanismus zwischen einer vollständig ausgefahrenen maximal tiefen Betriebsstellung in eine vollständig eingefahrene maximal flach-langgestreckte Stellung verstellbar sind, insbesondere stufenlos.

7. Fahrzeugtechnische Hebebühnenvorrichtung nach einem der vorhergehenden Ansprüche, umfassend wenigstens einen mit dem wenigstens einen Lastaufnahme-Flächenelement gekoppelten Linearspindel-Mechanismus aufweisend wenigstens eine Hubsäule eingerichtet zur lasttragenden Überwindung des vordefinierbaren/vordefinierten Höhenunterschieds.

8. Fahrzeug, insbesondere Kraftfahrzeug, mit einer fahrzeugtechnischen Hebebühnenvorrichtung nach einem der vorhergehenden Ansprüche, wobei die fahrzeugtechnische Hebebühnenvorrichtung vorteilhaft lediglich rein mechanisch an das Fahrzeug gebunden ist, insbesondere an einen Kofferraum- oder Laderaumboden des Fahrzeugs.

9. Fahrzeug nach dem vorhergehenden Anspruch, wobei eine/die Abstützeinheit der Hebebühnenvorrichtung, insbesondere ein/der Kasten der Abstützeinheit, dauerhaft mit dem Fahrzeug verbunden ist; und/oder wobei das wenigstens eine Lastaufnahme-Flächenelement von einer/der Abstützeinheit der Hebebühnenvorrichtung entkoppelbar/entkoppelt ist.

10. Verfahren zum Positionieren einer an einem Fahrzeug (1) montierten fahrzeugtechnischen Hebebühnenvorrichtung (10) nach einem der Ansprüche 1 bis 7 in einer/der Transportstellung (Pt) in zumindest annähernd vertikaler Ausrichtung und/oder in eine Betriebsstellung (Pb) außerhalb der Fahrzeughülle in zumindest annähernd horizontaler Ausrichtung, wobei wenigstens ein Lastaufnahme-Flächenelement (11) translatorisch relativ zu einer/der lasttragend an einem Fahrzeugladeraumboden an das Fahrzeug gekoppelten Abstützeinheit (12) verlagert wird und aus der vertikalen Ausrichtung in die horizontale Ausrichtung in Betriebsstellung gekippt wird, und in der horizontalen Ausrichtung vertikal verlagert wird.

11. Fahrzeugtechnische Hebebühnenvorrichtung nach einem der Ansprüche 1 bis 7, hergestellt durch Ausbilden einer translatorischen Kinematik, die an einer Abstützeinheit der fahrzeugtechnischen Hebebühnenvorrichtung zwischen einer/der Transportstellung und einer Betriebsstellung wirksam ist, und durch lasttragendes Koppeln der translatorischen Kinematik mit einer Kippkinematik zum Verbringen wenigstens eines Lastaufnahme-Flächenelements aus einer vertikalen in eine horizontale Ausrichtung, und durch lasttragendes Koppeln zumindest der translatorischen Kinematik mit einer Hebekinematik zum Heben oder Senken des wenigstens einen Lastaufnahme-Flächenelements in Betriebsstellung zwischen Kofferraum- oder Laderaumboden des Fahrzeugs und dem Untergrund.

12. Fahrzeug (1) mit einer fahrzeugtechnischen Hebebühnenvorrichtung nach einem der Ansprüche 1 bis 7, hergestellt durch lasttragende Montage oder Befestigung der Abstützeinheit (12) an einem Fahrzeugladeraumboden, insbesondere mittels Schraubverbindungen oder dergleichen form- und/oder kraftschlüssiger Verbindungsmittel, insbesondere bei rein mechanischer Schnittstelle ohne elektrische oder hydraulische oder dergleichen aktuatorische Schnittstelle zum Fahrzeug (1).

13. Verwendung einer fahrzeugtechnischen Hebebühnenvorrichtung nach einem der Ansprüche 1 bis 7 im Laderaum eines Fahrzeugs, insbesondere mit heckseitiger Zugänglichkeit.

14. Verwendung einer rein mechanisch konzipierten Kinematik ohne elektrische und/oder aktuatorische und/oder hydraulische Komponenten und auch ohne aktive Antriebskomponenten, zum Bereitstellen einer fahrzeugtechnischen Hebebühnenvorrichtung nach einem der Ansprüche 1 bis 7.

15. Verwendung einer rein mechanisch konzipierten Kinematik ohne elektrische und/oder aktuatorische und/oder hydraulische Komponenten zum Bereitstellen einer fahrzeugtechnischen Hebebühnenvorrichtung (10) nach einem der Ansprüche 1 bis 7, wobei die Kinematik eingerichtet ist für eine lineare Verlagerung bzw. für eine Translation des wenigstens einen Lastaufnahme-Flächenelements in Höhenrichtung.
